# EUROPÄISCHE PATENTSCHRIFT

(11) **EP 2 327 490 B1**
(45) Veröffentlichungstag und Bekanntmachung des Hinweises auf die Patenterteilung: **29.02.2012**
(21) Anmeldenummer: 09014770.3
(22) Anmeldetag: 27.11.2009
(51) Int. Cl.: B21H 3/04, B21H 3/06, B23G 7/02, B23P 15/24, B23P 15/52

(54) **Umformwerkzeug und Verfahren zur Erzeugung einer Oberfläche auf einem Umformwerkzeug**
Reforming tool and method for generating a surface on a reforming tool
Outil de déformage et procédé de production d'une surface sur un outil de déformage

(43) Veröffentlichungstag der Anmeldung: 01.06.2011
(73) Patentinhaber: LMT Fette Werkzeugtechnik GmbH & Co. KG, 21493 Schwarzenbek (DE)
(72) Erfinder: Immich, Philipp, 21493 Schwarzenbek (DE)
(74) Vertreter: Hauck Patent- und Rechtsanwälte

(56) Entgegenhaltungen:
- DE-A1- 3 934 621
- DE-A1-102005 059 429
- DE-A1-102006 030 661

## Beschreibung

Die Erfindung bezieht sich auf ein Umformwerkzeug nach dem Oberbegriff des Patentanspruchs 1 und auf ein Verfahren zur Herstellung einer Oberfläche auf einen Umformwerkzeug nach dem Oberbegriff des Patentanspruchs 7.

Umformwerkzeuge sind beispielsweise Profilrollen, insbesondere Gewinderollen, Walzstangen oder dergleichen Werkzeuge mit denen aufgrund von Pressdruck und unter Umständen von Wärme eine Umformung am Werkstück vorgenommen wird, beispielsweise ein Gewinde eingedrückt wird. Derartige Werkzeuge sind einem hohen Verschleiß ausgesetzt. Es ist daher auch bekannt, sie mit einer verschleißfesten Beschichtung zu versehen.

Aus US 5,509,287 A ist bekannt, derartige Formwerkzeuge mit einem Dünnschichtverfahren verschleißfester zu machen, beispielsweise durch Aufdampfen einer oder mehrerer Hartstoffschichten.

Aus DE 10 2006 030 661 B4, welche die Basis für den Oberbegriff des Anspruchs 1 bzw. 7 bildet, ist es auch bekannt, verschleißfeste Schichten auf dem metallischen Grundkörper durch Auftragschweißverfahren aufzubringen. Schließlich ist auch bekannt, Hartmetallsegmente auf einen Grundkörper zu schrauben.

Umformwerkzeuge werden derzeit aus hochlegierten Stählen, vorzugsweise aus HSS oder Warmarbeitsstählen gefertigt, welche in einer zweiten Wärmebehandlung sekundär gehärtet werden. Zur Steigerung der Verschleißständigkeit ist auch bekannt, diese Werkzeuge nach der Schleifbehandlung mittels Nitrier- oder Carbonitrierprozesses unter Plasma- oder Gasunterstützung zu behandeln. Nachteilig bei den Nitrierprozessen ist, dass eine Verschleißbeständigkeit nur in äußersten Randzonen gesteigert wird, beispielsweise bis zu einer Tiefe von 50 µm.

Bei einem Auftragsschweißverfahren erfolgt der Auftrag einer Hartstoffschicht durch ein Schweißverfahren. Die Verbindung selbst wird durch eine starke Durchmischung zwischen Zusatzwerkstoff und Werkstoff ermöglicht. Dazu ist verfahrensnotwendig, eine größere Wärmemenge in das Werkzeug einzuleiten. Dies hat zur Folge, dass die Härte und Festigkeit des Grundkörpers abnehmen und somit die Stützwirkung für die Hartstoffschicht. Aufgrund der Erwärmung des Werkstücks beim Auftragschweißen kann es zu einem Härteverlust kommen, der durch eine erneute Wärmebehandlung kompensiert werden muss. Diese führt möglicherweise ihrerseits zu einem Verzug des Werkstücks.

Der Erfindung liegt die Aufgabe zugrunde, ein Umformwerkzeug herzustellen und ein Verfahren zur Herstellung eines Umformwerkzeugs anzugeben, bei dem eine Hartstoffschicht auf einen Grundkörper für das Umformwerkzeug diesen in seinen gewünschten Eigenschaften nicht negativ beeinflusst und eine bessere Anbindung an den Grundkörper und einen höheren Hartstoffgehalt aufweist.

Diese Aufgabe wird durch die Merkmale der Ansprüche 1 und 7 gelöst.

Bei dem erfindungsgemäßen Umformwerkzeug ist eine Hartstoffschicht durch Auftraglöten aufgebracht. Das Umformwerkzeug ist z.B. eine Profilrolle, insbesondere Gewinderolle, auch eine Profilstange oder ein Gewindeformer oder Gewindefurcher.

Nach einer Ausgestaltung der Erfindung wird für den Binder für die Beschichtung z.B. Nickel, Kobalt, Silber oder Eisen gewählt.

Nach einer weiteren Ausgestaltung der Erfindung besteht der Hartstoff aus Carbiden, Nitriden, Boriden, Oxiden der 4., 5. oder 6. Nebengruppe des Periodensystems, insbesondere aus Wolframcarbid, Vanadiumcarbid, Chromcarbid, Titancarbid, Tantalcarbid oder Niobcarbid.

Der Grundkörper besteht vorzugsweise aus Stahl, Keramik oder Hartmetall. Bei der Verwendung von Stahl wird vorzugsweise ein HSS oder Warm- oder Kaltarbeitsstahl eingesetzt.

Das erfindungsgemäße Verfahren zur Erzeugung einer Oberfläche auf einem Umformwerkzeug nach Anspruch 7 besteht darin, dass die Hartstoffschicht durch Auftraglöten aufgebracht wird. Das Lot wird nach einer Ausgestaltung der Erfindung vor dem Lötprozess mittels Vlies, Pulver oder Suspension aufgebracht. Das Pulver wird zum Beispiel aufgesprüht. Eine andere Möglichkeit besteht darin, den Grundkörper in eine Suspension einzutauchen oder die Suspension mit einem Pinsel auf den Grundkörper aufzubringen. Der Auftrag kann ganzflächig oder nur partiell erfolgen. Zur Verbesserung der anfänglichen Haftung des Lots am Werkstück wird dem Lot vorzugsweise ein organischer Binder zugesetzt.

Je nach Schichtdicke wird das Lot in einer Dicke von zum Beispiel 0,1 bis 10 mm auf den Grundkörper aufgebracht.

Das Auftraglöten wird nach einer weiteren Ausgestaltung der Erfindung mittels Induktions-, Flamm-, Schutzgas-, Laser-, Plasma- oder Ofenlöten durchgeführt.

Die Erfindung hat den Vorteil, dass aufgrund der relativ niedrigen Prozesstemperaturen ein geringer Wärmeeintrag in den Grundkörper erfolgt, dieser daher in seinem Gefüge nicht beeinträchtigt wird. Durch die Diffusionsanbindung der Lötschicht wird eine hohe Festigkeit der Verschleißschicht gewährleistet. Durch die höheren Vernetzungsmöglichkeiten der Binderschicht im Lötprozess lässt sich die Hartstoffschicht in ihrem Hartstoffgehalt vergrößern.

Für das Aufbringen der Hartstoffschicht bieten sich grundsätzlich erfindungsgemäß zwei Möglichkeiten an. In der einen Version wird die Hartstoffschicht durch Auftraglöten auf den Grundkörper mit Übermaß aufgebracht, und ein Umformprofil wird anschließend in die Hartstoffschicht eingeformt. Diese Möglichkeit bietet sich zum Beispiel an, wenn das Profil eine geringe Tiefe und/oder geringe Abmessungen aufweist. So kann das Umformprofil zum Beispiel durch Schleifen aus der Hartstoffschicht heraus geformt werden. Die andere Möglichkeit besteht darin, den Grundkörper mit einem Umformprofil zu versehen, und zwar mit Untermaß. Anschließend wird durch Auftraglöten die Hartstoffschicht auf das Umformprofil aufgebracht. Hierbei muss unter Umständen ein Übermaß in Kauf genommen werden, das anschließend durch weitere Bearbeitung, insbesondere Schleifen, auf Maß gebracht wird.

Die Erfindung soll anhand von Zeichnungen näher erläutert werden.
- Fig. 1: zeigt einen Schnitt durch eine Gewinderolle.
- Fig. 2: zeigt vergrößert einen Teil der Gewinderolle nach Fig. 1.
- Fig. 3: zeigt in Vorderansicht und im Schnitt äußerst schematisch ein Radialgewinderollwerkzeug mit Rollen gemäß Figur 1 bzw. 2.
- Fig. 4: zeigt ein Schnittbild einer durch Auftraglöten aufgebrachten Hartstoffschicht.
- Fig. 5: zeigt eine durchgehende Hartstoffschicht auf einem Grundkörper.
- Fig. 6: zeigt ein Umformprofil, das aus der Hartstoffschicht nach Figur 5 geformt worden ist.
- Fig. 7: zeigt eine partiell durch Auftraglöten aufgebrachte Hartstoffschicht auf einen Grundkörper.
- Fig. 8: zeigt den umgeformten Grundkörper nach Figur 7 in Endansicht.
- Fig. 9: zeigt einen Gewindeformer bzw. Gewindefurcher, dessen Umformprofil durch Auftraglöten auf einen Grundkörper hergestellt ist.

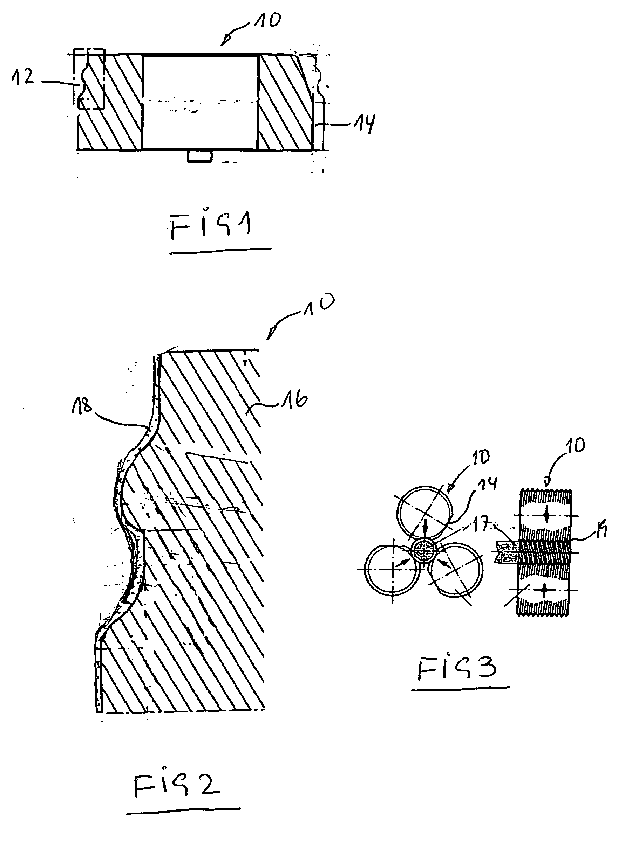

In Figur 1 ist eine Gewinderolle mit 10 bezeichnet. Sie ist herkömmlich aufgebaut und weist an ihrem Umfang ein Gewindeprofil 12 auf. Hierzu wird die Gewinderolle in ein geeignetes Rollwerkzeug eingesetzt, das schematisch in Figur 3 wiedergegeben ist. Man erkennt drei Gewinderollen 10 mit einer Abflachung 14, die ein Gewindeprofil 19 formen.

In Figur 2 ist das Gewindeprofil nach Figur 1 vergrößert dargestellt. Man erkennt, dass die Gewinderolle 10 einen Grundkörper 16 aufweist, der aus einem Grundwerkstoff besteht, beispielsweise aus einem HSS. Der aus dem Stahl geformte Grundkörper 16 wird im Untermaß hergestellt und wärmebehandelt. Anschließend wird durch ein geeignetes Lötverfahren eine Hartstoffschicht 18 aufgebracht. Die einzelnen in Frage kommenden Möglichkeiten zur Aufbringung der Hartstoffschicht 18 und auch die einzelnen hierfür in Frage kommenden Werkstoffe einschließlich der Binder sind weiter oben bereits erläutert. Nachstehend ein Beispiel für eine Gewinderolle mit einer Hartstoffschicht:

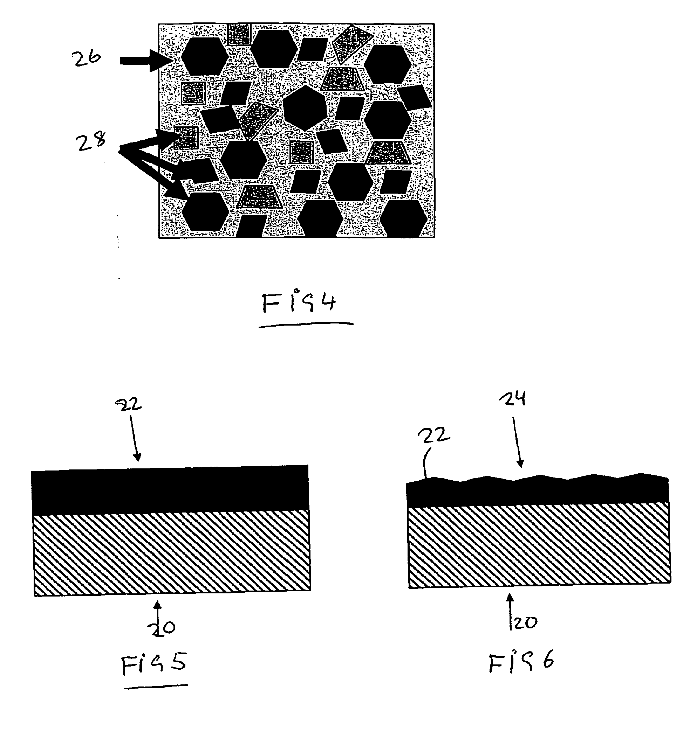

Anstatt eine Hartstoffschicht auf z.B. ein Gewindeprofil auf die Rolle 10 aufgetragen, ist es auch möglich, eine Hartstoffschicht ganzflächig mit größerer Dicke auf einen Grundkörper aufzubringen und das Umformprofil aus der Hartstoffschicht heraus zu formen. Dies ist in den Figuren 5 und 6 angedeutet. Man erkennt in den Figuren 5 und 6 einen Grundkörper 20, auf den in Figur 5 ganzflächig eine Hartstoffschicht 22 aufgebracht ist. Anschließend wird durch geeignete Formgebung, zum Beispiel Schleifen, ein Umformprofil 24 in die Hartstoffschicht 22 eingeformt.

Figur 4 zeigt ein Schnittbild einer durch Auftraglöten auf einen Grundkörper aufgebrachten Hartstoffschicht. In Figur 4 ist das Lot mit 26 bezeichnet, in dem verschiedene Hartstoffkörner 28 eingebettet sind. Die Korngröße der Hartstoffe bewegt sich vorzugsweise zwischen 1 und 20 µm. Die Hartstoffteilchen sind zum Beispiel Cr3C2 oder WC. Die Matrix 26 ist zum Beispiel ein Nickelbasislot. Die Härte der aufgelöteten Schichtsysteme nach der Erfindung beträgt vorzugsweise mehr als 1000 HV bzw. > 66 HRC. Die Temperatur beim Auftraglöten ist vorzugsweise größer als 450°C.

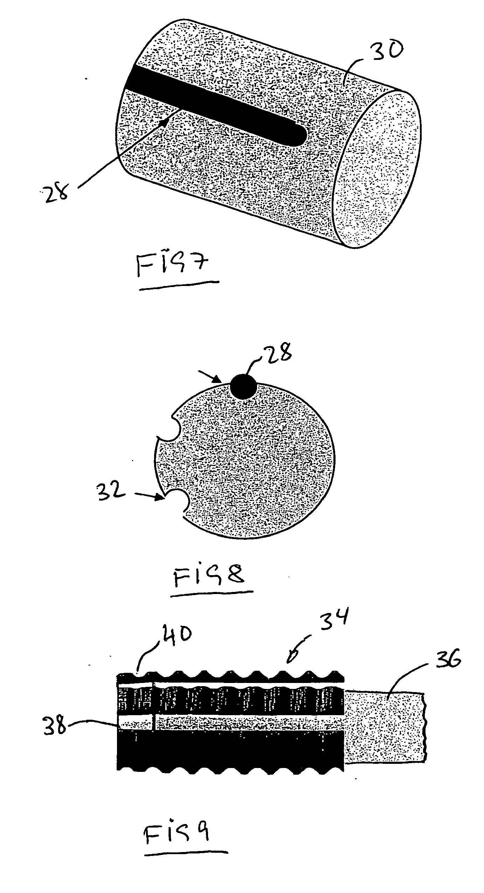

In Figur 7 ist schematisch angedeutet, wie bei 28 partiell eine Hartstoffschicht auf einen zylindrischen Grundkörper 30 aufgebracht ist. Dies geschieht zum Beispiel in der Weise, wie dies in Figur 8 angedeutet ist. Der Grundkörper weist am Umfang im Querschnitt kreisförmige achsparallele Nuten 32 auf, in die Hartstoffstreifen 28 durch Auftraglöten eingebracht sind. Anschließend kann durch geeignete Formgebung der Streifen mit einem Umformprofil versehen werden. Ein derartiges Verfahren lässt sich zum Beispiel anwenden auf einen Gewindeformer bzw. Gewindefurcher 34, wie er in Figur 9 dargestellt ist. Er weist einen Schaft 36 auf, der im Arbeitsbereich mit achsparallelen Nuten 38 am Umfang geformt wird. In die Nuten werden Hartstoffschichten durch Auftraglöten in der oben beschriebenen Art und Weise eingebracht, die anschließend durch weitere Formgebung, etwa durch Schleifen, mit einem Formprofil 40 versehen werden.

Die beschriebene Beschichtung von Grundkörpern von Werkzeugen kann sowohl bei der neuen Herstellung, als auch bei der Instandsetzung von Werkzeugen vorgenommen werden.

Nachstehend zwei Beispiele für Hartstoffsysteme, die auf einem Grundkörper für ein Umformwerkzeug aufgebracht werden können:
- Hartstoffsystem NI102 (B-Ni82CrSiBFe-970/1000) mit WC
- Hartstoffsystem NI106 (B-Ni89P875) mit Cr3C2

Cr2C2 und WC sind jeweils die Hartstoffe und Ni102 und Ni106 die Lotsysteme.

## Patentansprüche

1. Umformwerkzeug mit einem Grundkörper und einer verschleißfesten Beschichtung aus Hartstoff, **dadurch gekennzeichnet, dass** die Beschichtung (18) aus Hartstoff durch Auftraglöten aufgebracht ist.

2. Umformwerkzeug nach Anspruch 1, **dadurch gekennzeichnet, dass** es eine Profilrolle, insbesondere Gewinderolle (10), eine Profilstange, einen Gewindeformer bzw. Gewindefurcher oder dergleichen ist.

3. Umformwerkzeug nach Anspruch 1 oder 2, **dadurch gekennzeichnet, dass** der Binder für die Beschichtung (18) von Nickel, Kobalt, Silber oder Eisen gebildet ist.

4. Umformwerkzeug nach einem der Ansprüche 1 bis 3, **dadurch gekennzeichnet, dass** der Hartstoff aus Carbiden, Nitriden, Boriden der 4., 5. oder 6. Nebengruppe des Periodensystems, insbesondere aus Wolframcarbid (WC), Vanadiumcarbid (VC), Chromcarbid (CrC), Titancarbid (TiC), Tantalcarbid (TaC) oder Niobcarbid (NbC) besteht.

5. Umformwerkzeug nach einem der Ansprüche 1 bis 4, **dadurch gekennzeichnet, dass** der Grundkörper (16) aus Stahl, Keramik oder Hartmetall geformt ist.

6. Umformwerkzeug nach Anspruch 5, **dadurch gekennzeichnet, dass** der Stahl ein HSS oder Warm- oder Kaltarbeitsstahl ist.

7. Verfahren zur Erzeugung einer Oberfläche auf einem Umformwerkzeug, indem auf einen Grundkörper eine Schicht aus Hartstoff aufgebracht wird, **dadurch gekennzeichnet, dass** die Schicht durch Auftraglöten aufgebracht wird.

8. Verfahren nach Anspruch 7, **dadurch gekennzeichnet, dass** das Löt vor dem Lötprozess mittels Vlies, Pulver oder Suspension auf den Grundkörper aufgebracht wird.

9. Verfahren nach Anspruch 8, **dadurch gekennzeichnet, dass** das Lot in einer Dicke von 0,1 bis 10 mm auf den Grundkörper aufgebracht wird.

10. Verfahren nach einem der Ansprüche 7 bis 9, **dadurch gekennzeichnet, dass** die Hartstoffschicht mittels Induktions-, Flamm-, Schutzgas-, Laser-, Plasma- oder Ofenlöten auf den Grundkörper aufgelötet wird.

11. Verfahren nach einem der Ansprüche 7 bis 10, **dadurch gekennzeichnet, dass** eine Hartstoffschicht durch Auftraglöten auf den Grundkörper mit Übermaß aufgebracht und ein Umformprofil anschließend in die Hartstoffschicht eingeformt wird.

12. Verfahren nach einem der Ansprüche 7 bis 10, **dadurch gekennzeichnet, dass** der Grundkörper mit einem Umformprofil mit Untermaß geformt und eine Hartstoffschicht auf das Umformprofil aufgebracht wird.

## Claims

1. A reforming tool having a basic body and a wear-resistant coating made of hard material, **characterized in that** the coating (18) of hard material is applied by solder coating.

2. The reforming tool according to claim 1, **characterized in that** it is a profiled roller, especially a thread roll (10), a profiled rod, a thread former or thread tap, etc.

3. The reforming tool according to claim 1 or 2, **characterized in that** the binder for the coating (18) is made of nickel, cobalt, silver or iron.

4. The reforming tool according to one of claims 1 to 3, **characterized in that** the hard material consists of carbides, nitrides, borides of the 4^{th}, 5^{th}, or 6^{th} subgroup of the periodic system, especially tungsten carbide (WC), vanadium carbide (VC), chromium carbide (CrC), titanium carbide (TiC), tantalum carbide (TaC) or niobium carbide (NbC).

5. The reforming tool according to one of claims 1 to 4, **characterized in that** the basic body (16) is formed from steel, ceramic or hard metal.

6. The reforming tool according to claim 5, **characterized in that** the steel is a HSS or hot work or cold work steel.

7. A method for generating a surface on a reforming tool by applying a coating of hard material on a basic body, **characterized in that** the coating is applied by solder coating.

8. The method according to claim 7, **characterized in that** the solder is applied before the soldering process by means of fleece, powder or suspension to the basic body.

9. The method according to claim 8, **characterized in that** the solder is applied at a thickness of 0.1 to 10 mm to the basic body.

10. The method according to one of claims 7 to 9, **characterized in that** a hard material coating is soldered on by means of induction soldering, flame soldering , inert gas soldering , laser soldering , plasma soldering or oven soldering to the basic body.

11. The method according to one of claims 7 to 10, **characterized in that** a hard material layer is applied by being solder coated to the basic body overdimensioned, and a reforming profile is then formed into the hard material layer.

12. The method according to one of claims 7 to 10, **characterized in that** the basic body is formed underdimensioned with a reforming profile, and a hard material layer is applied to the reforming profile.

## Revendications

1. Outil de déformage comprenant un corps de base et un revêtement résistant à l'usure en substance dure, **caractérisé en ce que** le revêtement (18) en substance dure est appliqué par rechargement par brasage.

2. Outil de déformage selon la revendication 1, **caractérisé en ce qu'**il est une molette profilée, en particulier une molette de roulage à filet (10), une tige profilée, un dispositif à mouler les filets et/ou un dispositif à strier les filets ou similaires.

3. Outil de déformage selon les revendications 1 ou 2, **caractérisé en ce que** le liant pour le revêtement (18) est formé de nickel, de cobalt, d'argent ou de fer.

4. Outil de déformage selon une des revendications 1 à 3, **caractérisé en ce que** la substance dure est composée de carbure, de nitrure, de borure du 4^{e}, 5^{e} ou 6^{e} sous-groupe du système périodique, en particulier de carbure de tungstène (WC), de carbure de vanadium (VC), de carbure de chrome (CrC), de carbure de titane (TiC), de carbure de tantale (TaC) ou de carbure de niobium (NbC) .

5. Outil de déformage selon une des revendications 1 à 4, **caractérisé en ce que** le corps de base (16) est en acier, céramique ou métal dur.

6. Outil de déformage selon la revendication 5, **caractérisé en ce que** l'acier est un acier à haute résistance ou un acier pour travail à chaud ou à froid.

7. Procédé de production d'une surface sur un outil de déformage, par application d'une couche de substance dure sur un corps de base, **caractérisé en ce que** la couche est appliquée par rechargement par brasage.

8. Procédé selon la revendication 7, **caractérisé en ce que** le brasage est appliqué avant le processus de brasage au moyen d'un non-tissé, d'une poudre ou suspension sur le corps de base.

9. Procédé selon la revendication 8, **caractérisé en ce que** le brasage est appliqué dans une épaisseur de 0,1 à 10 mm sur le corps de base.

10. Procédé selon une des revendications 7 à 9, **caractérisé en ce que** la couche de substance dure est brasée sur le corps de base au moyen du brasage par induction, à la flamme, au gaz inerte, laser, plasma ou au four.

11. Procédé selon une des revendications 7 à 10, **caractérisé en ce qu'**une couche de substance dure est appliquée en excès par rechargement par brasage sur le corps de base et un profilé de déformage est ensuite moulé dans la couche de substance dure.

12. Procédé selon une des revendications 7 à 10, **caractérisé en ce que** le corps de base est formé avec un profilé de déformage dans une dimension au-dessous de la normale et une couche de substance dure est appliquée sur le profilé de déformage.
